# EUROPEAN PATENT SPECIFICATION

(11) **EP 2 274 898 B1**
(45) Date of publication and mention of the grant of the patent: **30.04.2014**
(21) Application number: 09729022.5
(22) Date of filing: 10.03.2009
(51) Int. Cl.: H04L 29/14, H04L 29/08, G06F 11/20, H04L 29/06

(54) **METHOD FOR ENABLING FASTER RECOVERY OF CLIENT APPLICATIONS IN THE EVENT OF SERVER FAILURE**
VERFAHREN ZUR ERMÖGLICHUNG EINER SCHNELLEREN WIEDERHERSTELLUNG EINER KLIENTENANWENDUNG BEI DEM EREIGNIS EINES SERVER AUSFALLS
PROCÉDÉ POUR PERMETTRE UNE RÉCUPÉRATION PLUS RAPIDE D'APPLICATIONS CLIENT DANS LE CAS D'UN ÉCHEC DE SERVEUR

(30) Priority: 02.04.2008 US 61185
(43) Date of publication of application: 19.01.2011
(73) Proprietor: International Business Machines Corporation, Armonk, NY 10504 (US)
(72) Inventor: COFFEY, Michael, Winchester Hampshire SO21 2JN (GB); MUTTUR, Manjunath Basappa, Bangalore 560071 (IN)
(74) Representative: Pyecroft, Justine Nicola C.
(86) International application number: PCT/EP2009/052803
(87) International publication number: WO 2009/121689

(56) References cited:
- EP-A- 1 231 756
- EP-A- 1 892 921
- US-A1- 2002 087 912
- US-A1- 2005 086 342
- US-A1- 2007 198 710

## Description

### Technical Field

The present invention is generally directed to multinode data processing systems and methods. More particularly, the present invention is directed to a system and method for improving recovery time in the event of a server failure. Even more particularly, the present invention is directed to a system in which a fallover node provides failure notification as opposed to waiting for a determination of failure based on the lack of performance by the failed node. As used herein and in the appended claims, the terms "node" and "server" are used interchangeably, though it is understood that a server may include several nodes.

### Background of the Invention

In clusterware applications such as HACMP (High Availability Cluster Management Program), there exists many client applications which are intelligent enough to automatically reconnect to a backup server when the primary server fails. This is made possible by dynamically moving the IP (Internet Protocol) address of the primary server, with which a client was interacting, to the backup server. Accordingly, client applications do not have to be killed and/or restarted in response to a server failure. This capability of clusterware is referred to herein as "fallover." However, the problem is that, as soon as the primary server fails, the TCP (Transmission Control Protocol) connection existing between the client and the server takes some time to get terminated. This is primarily because client applications are unaware of the server failure and so the client application keeps retransmitting until the TCP retransmit counter expires, thus eventually terminating the TCP connection. Accordingly, it is seen that it takes a considerable amount of time for client applications to recognize the server failure event before attempting a reconnect to backup server.

US Patent Application Publication 2002/0087912 discloses a method, system and apparatus by which TCP connections may be failed-over from one system to another within a highly available network service, and appear transparent to the remote client. The connection state and ownership information of a system is broadcast within the network, so that if a first system crashes while running an application, a predetermined take-over policy causes a peer system to assume connection without loss of data such that a permanent connection has been established from the client's point of view. After the failed system has been restored to a normal state, new connections are established by the first system.

EP 1 892 921 discloses a method and system for creating an innovative file system that separates its directly presentation from its data store. The method and system include processing, division, distribution, managing, synchronising, and reassembling of file system objects that does not delay the presentation of the content to the user, but also uses a reduced amount of storage space. The solution includes the ability to manage and control the integrity of the files distributed across the network, and the ability to server and reconstruct files in real time using a Virtual File Control System.

From the above, it is therefore seen that there exists a need in the art to overcome the deficiencies and limitations described herein and above.

### Summary of the Invention

The delay described above is avoided by timely notification of the failure event to the client. The client preferably reconnects as soon as it receives this notification about the server failure. The present invention preferably provides a mechanism for speeding up the process of reconnection, to one or more backup servers within cluster, by a client application. To quickly terminate all of the TCP connections existing between the server (the presumably failed node) and the client, the client preferably receives a RST (Reset Packet) for that TCP connection as soon as the server fails. Despite the failure of the node from which this RST packet is expected, the method of the present invention still preferably generates this RST packet. To achieve this, as soon as the fallover happens, the fallover node (backup server) preferably sends this RST packet to the client. In effect the fallover node pretends to be the failed node for the client.

In accordance with one embodiment of the present invention, a method for improving recovery in fallover conditions comprises the step of sending notification of the failure of a server node, which is acting as server for a client application running on a client node, to the client application. This notification is provided by the fallover node acting as backup for the server node.

Preferably the fallover node masquerades as the server node in order to send the notification of failure. In accordance with a preferred embodiment, a data packet is received from the client application. This packet is accessed to determine transmission information and the transmission information is used to send notification of failure of the server node to the client application.

In accordance with a preferred embodiment, the data packet is one that has been retransmitted by the client application when no acknowledgement of the original transmission of the data packet to the server node was received by the client application. In one embodiment, the fallover node informs said client node that the fallover node has taken over for said server node.

Additional features and advantages are realized through the techniques of the present invention. Other embodiments and aspects of the invention are described in detail herein and are considered a part of the claimed invention.

The recitation herein of desirable objects which are met by various embodiments of the present invention is not meant to imply or suggest that any or all of these objects are present as essential features, either individually or collectively, in the most general embodiment of the present invention or in any of its more specific embodiments.

### Brief Description of the Drawings

Preferred embodiments of the present invention will now be described, by way of example only, and with reference to the following drawings:
FIG. 1 is a block diagram illustrating the connections between a basic node configuration environment in which the present invention is employed and also illustrates a sequence of events that occurs in the operation of a preferred embodiment of the present invention; and
FIG. 2 is a flow chart illustrating a sequence of events that typically occurs in the process of a preferred embodiment of the present invention.

### Detailed Description

As previously discussed, a client may be communicating with a server using, for example, the TCP protocol. If the server fails, the client may not notice that this has happened. In the absence of any acknowledgements to the packets the client sends out, the client will keep retransmitting until the TCP retransmit counter expires. This could be quite some time later. It is desirable therefore to force the connection between the client and the server to be terminated and reset. The TCP protocol has a RESET (RST) option. When two parties are communicating, if the first party notices that the other party has stopped communicating, then the first party may send an RST to force the other party to reset the connection. The point here is however that the client may not realize for quite some time that there is a problem. When the client does eventually realize that there is a problem, the client will then attempt to reconnect and will be connected to a fallover node.

The invention, in accordance with a preferred embodiment, makes use of a backup (or fallover) server which monitors a server node with which the client is communicating. When the fallover node notices that the server node has failed, the fallover node takes over the address of the server node. At this point the backup server looks at all traffic on the taken over IP address to see if any is destined for (i.e. addressed to) the application that used to run on the server node, but has been restarted on the backup node along with the IP address. If it finds any it then 'masquerades" as the server node.

The fallover node however has no knowledge of the connections that were held by the server node. The fallover node doesn't know who held them or what type of connections they held. The fallover node therefore needs to be able to deduce who the server node had a connection with and to then 'encourage' (using the RST option) such clients to connect to the fallover node. Naturally this would be transparent to any such clients who would think they were reconnecting to the server node.

For this to work, the client has to believe that the RST packet came from the server node. In a TCP connection every packet has a sequence number and "ACK" number which insures that data is properly ordered at the end of the transmission at the receiver. At any point of time, if a TCP receives a packet with incorrect sequence number or ACK number, then it immediately discards that packet. So, for any application "A" to be able to send packets on a TCP connection existing between two other applications "B" and "C," application "A" has to determine the sequence number, ACK number, and TCP header information for the next packet in the TCP sequence to be sent to the client.

Similarly, for the backup server (fallover node) to be able to send a RST (Reset) packet to the client it has to determine appropriate TCP header information for that RST packet. In a TCP connection, when either of the communicating parties dies without terminating the connection by sending a FIN packet (which is used in TCP to indicate an end of transmission) or RST packet, the other party begins to retransmit the old packets again.

In the preferred embodiment, the fallover node has taken over the address of the server. The fallover node therefore receives some retransmitted packets from the client as soon as it acquires (by activating) the IP address from the failed node. The backup server (fallover node) obtains TCP header information of the next packet in the sequence using the retransmitted packet it just received from the client. This TCP header information enables the backup server to determine for example what sequence number the RST packet should use and where the RST packet should be sent.

Using raw IP sockets, any application can handcraft a packet and send it on a TCP connection existing between two different applications. This newly crafted packet appears to be a genuine packet for the receiver since it thinks that it is sent by its peer application. In the present invention, clusterware such as HACMP handcrafts a RST packet using raw IP sockets and send it to the client. This RST packet breaks the old TCP connection immediately and hence a client can reconnect again quickly.

In this invention, there is no need to change either the existing client applications or the TCP stack itself. Irrespective of whether the TCP connection is terminated by TCP connection time-out or by RST packet, the client application views it as abrupt termination and attempts a reconnect.

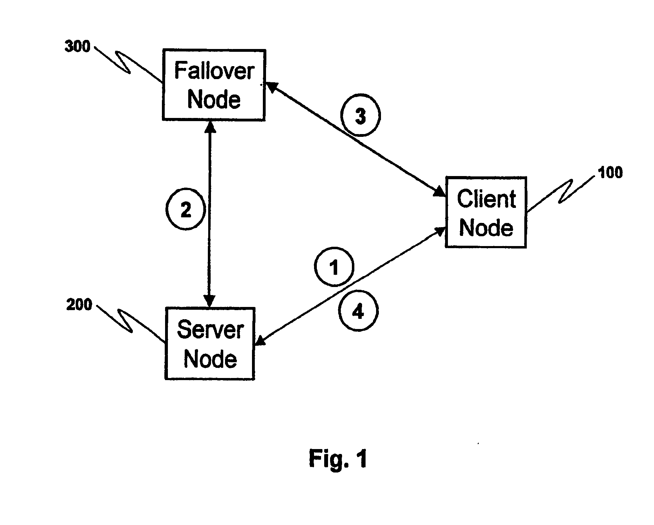

Figure 1 illustrates, in accordance with a preferred embodiment, a sequence of events or situations in the use of the present invention. In particular, the "1" in the circle indicates an initial state in which client node 100 is in communication with server node 200. The "2" in the circle indicates the event in which server node 200 fails and there is a fallover to fallover node 300. The "3" in the circle indicates the event in which fallover node 300 communicates to client node 100 that server node 200 has failed and that it is taking over the communication function. The "4" in the circle indicates a final status in which client node 100 is now connected to fallover node 300. The illustrated process avoids the necessity of an application running on client node 100 having to wait for an indication of failure for node 200 which is long in coming since application level software is not typically aware of node failures. The fallover process, running at system level speeds and priorities occurs much faster and this fact along with the protocol structure of TCP connections allows a much faster notification to a client based server application.

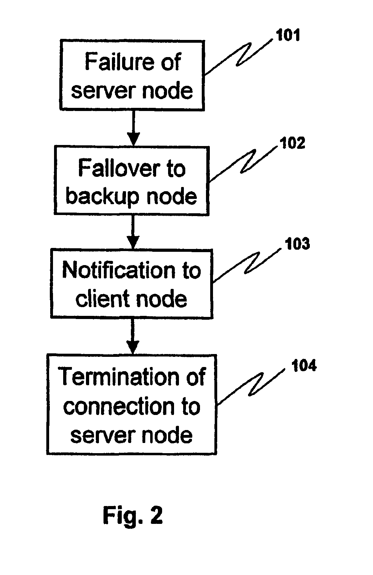

Figure 2 illustrates a typical sequence of events that occurs in the process of the present invention. The process is triggered by the failure of server node 200 (step 101). System level software detects this failure in a relatively rapid fashion and provides a fallover to fallover (or backup) node 300 (step 102). Fallover node 300 then provides notification to client node 100 (step 103). Client node 100 then terminates the connection to node 200 (step 104).

The present invention also encompasses software in the form of machine readable instructions for carrying out the process recited herein. Furthermore, the present invention encompasses data processing systems having such instructions disposed within the memories thereof for carrying out the recited process.

While the invention has been described in detail herein in accordance with certain preferred embodiments thereof, many modifications and changes therein may be effected by those skilled in the art. Accordingly, it is intended by the appended claims to cover all such modifications and changes as fall within the scope of the invention.

## Claims

1. A method for improving recovery in fallover conditions, said method comprising the step of:
monitoring by fallover node of a server node, the server node acting as a server for a client application running on a client node and the fallover node acting as backup for the server node;
responsive to noticing that the server node has failed, the fallover node taking over the address of the server node;
responsive to taking over the address of the server node, the fallover node receiving a data packet from the client node, said data packet being one which was previously transmitted to the failed server node but for which no acknowledgment has been received by the client node;
the fallover node using information within the retransmitted data packet to construct a notification, the notification for indicating to the client that the server node has failed and that the client should terminate a connection with the server node; and
the fallover node sending the notification to the client.

2. The method of claim 1 further including the step of terminating connection to said server node.

3. The method of claim 1 or 2, wherein the step of taking over the address of the server node comprises:
activating at the fallover node the IP address originally associated with the server node.

4. The method of claim 3, wherein the step of using information within the retransmitted data packet to construct a notification comprises:
obtaining, at said fallover node, TCP header information.

5. The method of claim 4 in which said header information includes packet sequence number.

6. The method of claim 4 or 5, wherein the step of constructing a notification comprises:
constructing a Reset packet at said fallover node.

7. The method of claim 6 in which said Reset packet construction uses raw sockets.

8. The method of claim 6 or 7 further including the step of transmitting said Reset packet to said application running on said client node.

9. The method of claim 6, 7 or 8 further including the step of terminating connection from said client node to said server node.

10. The method of claim 9 further including the step of attempting reconnection by said application.

11. The method of any preceding claim in which said server node and said client note are in communication via Transmission Control Protocol.

12. Apparatus for improving recovery in fallover conditions, said apparatus comprising a fallover node, the fallover node comprising:
means for monitoring a server node, the server node acting as a server for a client application running on a client node and the fallover node operable to act as backup for the server node;
means, responsive to noticing that the server node has failed, for taking over the address of the server node;
means, responsive to taking over the address of the server node, for receiving a data packet from the client node, said data packet being one which was previously transmitted to the failed server node but for which no acknowledgment has been received by the client node;
means for using information within the retransmitted data packet to construct a notification, the notification for indicating to the client that the server node has failed and that the client should terminate a connection with the server node; and
means for sending the notification to the client.

13. The apparatus of claim 12 further comprises a client node comprising means for terminating connection to said server node.

14. The apparatus of claim 12 or 13, wherein the means for taking over the address of the server node comprises:
means for activating the IP address originally associated with the server node.

15. A computer program comprising program code means adapted to perform the method of any of claims 1 to 11 when said program is run on a computer.

## Patentansprüche

1. Verfahren zum Verbessern der Wiederherstellung in Funktionsübernahme-Zuständen, wobei das Verfahren die Schritte umfasst:
Überwachen eines Server-Knotens durch den Übernahmeknoten, wobei der Server-Knoten als Server für eine Client-Anwendung, die auf einem Client-Knoten ausgeführt wird, und der Übernahmeknoten als Sicherung für den Server-Knoten betrieben wird;
in Reaktion auf ein Erkennen, dass der Server-Knoten ausgefallen ist, Übernehmen der Adresse des Server-Knotens durch den Übernahmeknoten;
in Reaktion auf das Übernehmen der Adresse des Server-Knotens Empfangen eines Datenpakets von dem Client-Knoten durch den Übernahmeknoten, wobei es sich bei dem Datenpaket um ein Datenpaket handelt, das zuvor an den ausgefallenen Server-Knoten gesendet wurde, für das aber keine Bestätigung von dem Client-Knoten empfangen wurde;
Verwenden von Daten in dem erneut gesendeten Datenpaket durch den Übernahmeknoten zum Erzeugen einer Mitteilung, wobei die Mitteilung dem Client angibt, dass der Server-Knoten ausgefallen ist und der Client eine Verbindung mit dem Server-Knoten beenden soll; und
Senden der Mitteilung an den Client durch den Übernahmeknoten.

2. Verfahren nach Anspruch 1, das ferner den Schritt des Beendens der Verbindung mit dem Server-Knoten beinhaltet.

3. Verfahren nach Anspruch 1 oder 2, wobei der Schritt des Übernehmens der Adresse des Server-Knotens umfasst:
Aktivieren der IP-Adresse an dem Übernahmeknoten, die ursprünglich dem Server-Knoten zugehörig war.

4. Verfahren nach Anspruch 3, wobei der Schritt des Verwendens von Daten in dem erneut gesendeten Datenpaket zum Erzeugen einer Mitteilung umfasst:
Erhalten von TCP-Kopfsatz-Daten an dem Übernahmeknoten.

5. Verfahren nach Anspruch 4, wobei die Kopfsatz-Daten eine Paketfolgen-Nummer beinhalten.

6. Verfahren nach Anspruch 4 oder 5, wobei der Schritt des Erzeugens einer Mitteilung umfasst:
Erzeugen eines Rücksetz-Pakets an dem Übernahmeknoten.

7. Verfahren nach Anspruch 6, wobei das Erzeugen des Rücksetz-Pakets rohe Sockets verwendet.

8. Verfahren nach Anspruch 6 oder 7, das ferner den Schritt des Übertragens des Rücksetz-Pakets an die Anwendung beinhaltet, die auf dem Client-Knoten ausgeführt wird.

9. Verfahren nach Anspruch 6, 7 oder 8, das ferner den Schritt des Beendens der Verbindung von dem Client-Knoten zu dem Server-Knoten beinhaltet.

10. Verfahren nach Anspruch 9, das ferner den Schritt des Versuchens einer Wiederherstellung der Verbindung durch die Anwendung beinhaltet.

11. Verfahren nach einem der vorangehenden Ansprüche, wobei der Server-Knoten und der Client-Knoten Daten über das Übertragungssteuerungs-Protokoll austauschen.

12. Vorrichtung zum Verbessern der Wiederherstellung in Funktionsübernahme-Zuständen, wobei die Vorrichtung einen Übernahmeknoten und der Übernahmeknoten Folgendes umfassen:
ein Mittel zum Überwachen eines Server-Knotens, wobei der Server-Knoten als Server für eine Client-Anwendung betrieben wird, die auf einem Client-Knoten ausgeführt wird, und der Übernahmeknoten als Sicherung für den Server-Knoten betreibbar ist;
in Reaktion auf das Erkennen, dass der Server-Knoten ausgefallen ist, ein Mittel zum Übernehmen der Adresse des Server-Knotens;
in Reaktion auf das Übernehmen der Adresse des Server-Knotens ein Mittel zum Empfangen eines Datenpakets von dem Client-Knoten, wobei es sich bei dem Datenpaket um ein Datenpaket handelt, das zuvor an den ausgefallenen Server-Knoten gesendet wurde, für das aber von dem Client-Knoten keine Bestätigung empfangen wurde;
ein Mittel zum Verwenden von Daten in dem erneut gesendeten Datenpaket zum Erzeugen einer Mitteilung, wobei die Mitteilung dem Client angibt, dass der Server-Knoten ausgefallen ist und der Client eine Verbindung mit dem Server-Knoten beenden soll; und
ein Mittel zum Senden der Mitteilung an den Client.

13. Vorrichtung nach Anspruch 12, die ferner einen Client-Knoten umfasst, wobei der Client-Knoten ein Mittel zum Beenden der Verbindung mit dem Server-Knoten umfasst.

14. Vorrichtung nach Anspruch 12 oder 13, wobei das Mittel zum Übernehmen der Adresse des Server-Knotens umfasst:
ein Mittel zum Aktivieren der IP-Adresse, die ursprünglich dem Server-Knoten zugehörig war.

15. Computerprogramm, das Programmcode-Mittel umfasst, die zum Ausführen des Verfahrens nach einem der Ansprüche 1 bis 11 geeignet sind, wenn das Programm auf einem Computer ausgeführt wird.

## Revendications

1. Procédé pour améliorer la récupération dans des conditions de repli, ledit procédé comprenant les étapes consistant à :
surveiller un noeud de serveur par un noeud de repli, le noeud de serveur agissant comme un serveur pour une application client s'exécutant sur un noeud client et le noeud de repli agissant comme une sauvegarde pour le noeud de serveur ;
en réponse à la notification que le noeud de serveur est en panne, reprendre l'adresse du noeud de serveur par le noeud de repli ;
en réponse à la reprise de l'adresse du noeud de serveur, recevoir par le noeud de repli un paquet de données provenant du noeud client, ledit paquet de données étant un qui a été transmis précédemment vers le noeud de serveur en panne mais pour lequel aucun accusé de réception n'a été reçu par le noeud client ;
utiliser par le noeud de repli des informations à l'intérieur du paquet de données retransmis afin de construire une notification, la notification indiquant au client que le noeud de serveur est en panne et que le client devrait mettre fin à une connexion avec le noeud de serveur ; et
envoyer la notification au client par le noeud de repli.

2. Procédé selon la revendication 1, incluant en outre l'étape consistant à mettre fin à une connexion vers ledit noeud de serveur.

3. Procédé selon la revendication 1 ou 2, dans lequel l'étape consistant à reprendre l'adresse du noeud de serveur comprend de :
activer au niveau du noeud de repli l'adresse IP associée à l'origine au noeud de serveur.

4. Procédé selon la revendication 3, dans lequel l'étape consistant à utiliser des informations à l'intérieur du paquet de données retransmis pour construire une notification comprend de :
obtenir, au niveau dudit noeud de repli, une information d'en-tête TCP.

5. Procédé selon la revendication 4, dans lequel ladite information d'en-tête inclut un numéro de séquence de paquet.

6. Procédé selon la revendication 4 ou 5, dans lequel l'étape consistant à construire une notification comprend de :
construire un paquet Réinitialisation au niveau dudit noeud de repli.

7. Procédé selon la revendication 6, dans lequel ladite construction de paquet Réinitialisation utilise des raw sockets.

8. Procédé selon la revendication 6 ou 7, incluant en outre l'étape consistant à transmettre ledit paquet Réinitialisation vers ladite application s'exécutant sur ledit noeud client.

9. Procédé selon la revendication 6,7 ou 8, incluant en outre l'étape consistant à mettre fin à une connexion dudit noeud client audit noeud de serveur.

10. Procédé selon la revendication 9, incluant en outre l'étape consistant à tenter une reconnexion par ladite application.

11. Procédé selon l'une quelconque des revendications précédentes, dans lequel ledit noeud de serveur et ledit noeud client sont en communication via un protocole de commande de transmission TCP.

12. Dispositif pour améliorer la récupération dans des conditions de repli, ledit dispositif comprenant un noeud de repli, le noeud de repli comprenant :
un moyen pour surveiller un noeud de serveur, le noeud de serveur agissant comme un serveur pour une application client s'exécutant sur un noeud client et le noeud de replié étant opérationnel afin d'agir comme sauvegarde pour le noeud de serveur ;
un moyen, en réponse à la notification que le noeud serveur est en panne, pour reprendre l'adresse du noeud de serveur ;
un moyen, en réponse à la reprise de l'adresse du noeud de serveur, pour recevoir un paquet de données provenant du noeud client, ledit paquet de données étant un qui a été précédemment transmis vers le noeud de serveur en panne mais pour lequel aucun accusé de réception n'a été reçu par le noeud client ;
un moyen pour utiliser des informations à l'intérieur du paquet de données retransmis afin de construire une notification, la notification indiquant au client que le noeud de serveur est en panne et que le client devrait mettre fin à une connexion avec le noeud de serveur ; et
un moyen pour envoyer la notification au client.

13. Dispositif selon la revendication 12, comprenant en outre un noeud de client comprenant un moyen pour mettre fin à une connexion avec ledit noeud de serveur.

14. Dispositif selon la revendication 12 ou 13, dans lequel le moyen pour reprendre l'adresse du noeud de serveur comprend :
un moyen pour activer l'adresse IP associée à l'origine au noeud de de serveur.

15. Programme informatique comprenant des moyens de code de programme adaptés pour mettre en oeuvre le procédé selon l'une quelconque des revendications 1 à 11 quand ledit programme est exécuté sur un ordinateur.
